# EUROPEAN PATENT APPLICATION

(11) **EP 4 773 355 A1**
(43) Date of publication of application: **08.07.2026**
(21) Application number: 24859696.7
(22) Date of filing: 26.08.2024
(51) Int. Cl.: H01M 50/105, H01M 10/0566, H01M 10/0587, H01M 50/184, H01M 50/186

(54) **NONAQUEOUS ELECTROLYTE SECONDARY BATTERY**

(30) Priority: 31.08.2023 JP 2023141139
(71) Applicant: Panasonic Intellectual Property Management Co., Ltd., Kadoma-shi, Osaka 571-0057 (JP)
(72) Inventor: OKUDA, Kazuhiro, Osaka 571-0057 (JP); YOSHIDA, Satoshi, Osaka 571-0057 (JP)
(74) Representative: Eisenführ Speiser
(86) International application number: PCT/JP2024/030232
(87) International publication number: WO 2025/047663

(57) **Abstract**

This nonaqueous electrolyte secondary battery (10) includes: an electrode body (60); and a laminate sheet outer casing (12) which is obtained by folding a laminate sheet including an adhesive resin layer in two along a bottom part (17). The laminate sheet outer casing has: a top part (16) from which a positive electrode tab and a negative electrode tab are derived from an overlapping part of the outer peripheral part of the laminate sheet; and two side parts (18, 20) which connect the top part and the bottom part to each other. The laminate sheet outer casing has a housing part (13) that houses the electrode body inside the overlapping part. Sealing parts (30, 40) are formed on the top part and the two side parts. Each side part has non-sealed parts (31, 41) that are connected to the housing part and the bottom part. Each non-sealed part is separated from the top part.

## Description

### TECHNICAL FIELD

The present disclosure relates to a non-aqueous electrolyte solution secondary battery.

### BACKGROUND ART

Non-aqueous electrolyte solution secondary batteries, such as lithium-ion batteries, have conventionally been used as power sources for electronic devices such as smartphones, tablet devices, and notebook PCs. In these cases, there is a particular demand for lighter and thinner secondary batteries.

For this reason, it is conceivable to use a secondary battery comprising a flat-shaped laminate sheet exterior body formed by folding a laminate sheet in two, such as an aluminum laminate film, as described in Patent Literature 1, as a power source for electronic devices.

### CITATION LIST

### PATENT LITERATURE

PATENT LITERATURE 1: Japanese Unexamined Patent Application Publication No. 2005-285526

### SUMMARY

In recent years, there has been a demand for non-aqueous electrolyte solution secondary batteries comprising laminate sheet exterior bodies to maintain high battery capacity even over long charge-discharge cycles. For this reason, it is desirable to increase the amount of electrolyte solution stored in the exterior body compared to conventional cases. Meanwhile, as a method for increasing the amount of electrolyte solution without increasing the external dimensions of the battery, it is conceivable to reduce the overall width of the sealed part at the stacked portion of the laminate sheet, thereby increasing the storage space for the electrolyte solution. However, in this case, the sealing performance of the exterior body may decrease.

It is an advantage of the present disclosure to improve cycle characteristics by increasing a storage amount of electrolyte solution without compromising sealing performance of a laminate sheet exterior body or increasing external dimensions in a non-aqueous electrolyte solution secondary battery comprising a laminate sheet exterior body.

The non-aqueous electrolyte solution secondary battery according to the present disclosure is a non-aqueous electrolyte solution secondary battery comprising: an electrode assembly having a positive electrode connected to a positive electrode tab and a negative electrode connected to a negative electrode tab; and a laminate sheet exterior body formed by folding a laminate sheet in two along a bottom portion, the laminate sheet including an adhesive resin layer, wherein the laminate sheet exterior body has a top portion from which the positive electrode tab and the negative electrode tab extend out at a stacked portion of outer peripheral portions of the laminate sheet, two side portions connecting the top portion and the bottom portion, and a housing part that houses the electrode assembly inside the stacked portion, the top portion and the two side portions each have a sealed part, each of the two side portions has a non-sealed part connecting to the housing part of the electrode assembly and the bottom portion, and each of the non-sealed parts is spaced apart from the top portion.

A non-aqueous electrolyte solution secondary battery comprising the laminate sheet exterior body according to the present disclosure makes it possible to increase the storage amount of electrolyte solution and improve cycle characteristics without compromising the sealing performance of the laminate sheet exterior body or increasing its external dimensions.

### BRIEF DESCRIPTION OF DRAWINGS

FIG. 1 is a perspective view showing a general shape of a non-aqueous electrolyte solution secondary battery according to an embodiment with its side portions folded.
FIG. 2 is a view showing a laminate sheet stacking step, a top portion sealing step, and a first side portion sealing step in a manufacturing step for the non-aqueous electrolyte solution secondary battery.
FIG. 3 is a view showing a liquid pouring step and a decompressing and sealing step.
FIG. 4 is a view showing a final sealing step, a side cutting step, and a side folding step.
FIG. 5 is a sectional view of the secondary battery of FIG. 4 before sides are folded.
FIG. 6 is a plan view showing pressing surfaces of molds to be used to heat and press two side portions to obtain the secondary battery of FIG. 5.
FIG. 7 is a view corresponding to FIG. 5 of a secondary battery of Comparative Example 1.
FIG. 8 is a plan view showing pressing surfaces of molds to be used to heat and press two side portions to obtain the secondary battery of FIG. 7.
FIG. 9 is a view corresponding to FIG. 5 of a secondary battery of Comparative Example 2.
FIG. 10 is a plan view showing pressing surfaces of molds to be used to heat and press two side portions to obtain the secondary battery of FIG. 9.

### DESCRIPTION Of EMBODIMENTS

An embodiment of the present disclosure is described below with reference to the drawings. Note that the following embodiment is not intended to limit the scope of the present disclosure, and configurations that selectively combine multiple examples are also included in the present disclosure.

### "Configuration of Non-Aqueous Electrolyte Solution Secondary Battery"

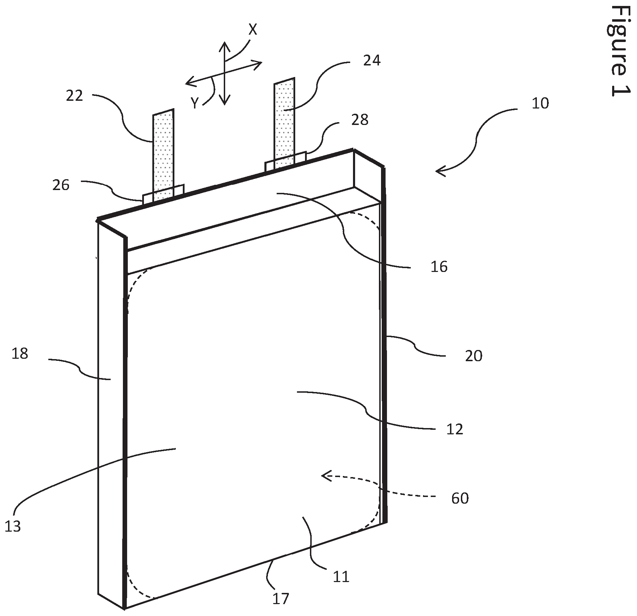

FIG. 1 is a perspective view showing the general shape of a non-aqueous electrolyte solution secondary battery 10 according to an embodiment. Hereinafter, the non-aqueous electrolyte solution secondary battery 10 will be referred to as a "secondary battery 10". The secondary battery 10 has a thin, rectangular parallelepiped shape overall and comprises an electrode assembly 60 and a laminate sheet exterior body 12 that houses the electrode assembly 60 and the electrolyte solution. Note that in this example, the secondary battery 10 is a lithium-ion secondary battery.

The laminate sheet exterior body 12 is formed by folding a film-like laminate sheet 11 including an adhesive resin layer, in two along the bottom portion 17. The wound electrode assembly 60 is housed in a thick, rectangular parallelepiped housing part 13.

The laminate sheet 11 has a metal layer made of, for example, aluminum, an aluminum alloy, or the like, the metal layer has a surface that is located on the inner side when the laminate sheet 11 is folded in two, and the surface is provided with an inner resin layer that is an adhesive resin layer. The inner resin layer is made of, for example, polypropylene. The metal layer and the inner resin layer can be bonded, for example, with carboxylic acid-modified polypropylene, in which carboxyl groups are added to polypropylene. The electrode assembly 60 is then encased in the twofold laminate sheet 11, and the remaining three sides of the laminate sheet 11 are sealed.

In the example shown in FIG. 1, the laminate sheet exterior body 12 has a top portion 16 on the upper side, a bottom portion 17 on the lower side, a first side portion 18 on the left side, and a second side portion 20 on the right side. Each of the top portion 16 and the first and second side portions 18, 20 is a portion where the laminate sheets 11 are stacked, and has a sealed part formed therein. The first and second side portions 18, 20 are then folded back in the thickness direction of the laminate sheet 11 to be laid on the side walls of the housing part 13.

In a stacked portion where there are stacked the outer peripheral portions of the twofold laminate sheet 11, the top portion 16 has both the longitudinal ends of the laminate sheet 11 that are stacked, and has a positive electrode tab 22 and a negative electrode tab 24 that extend out. The positive electrode tab 22 and the negative electrode tab 24 are connected to the positive electrode and negative electrode of the electrode assembly 60, respectively. Tab films 26, 28 are welded to the base portions of the positive electrode tab 22 and the negative electrode tab 24, respectively.

The secondary battery 10 comprising such a laminate sheet exterior body 12 is electrically connected to an external load by the positive electrode tab 22 and the negative electrode tab 24.

The bottom portion 17 is the folded-back portion of the laminate sheet 11 in the laminate sheet exterior body 12. The portion of the bottom portion 17 sandwiched between the two side portions 18, 20 forms a wall facing one end surface of the electrode assembly 60 in the winding axis direction to be described below.

In the stacked portion of the outer peripheral portions of the twofold laminate sheet 11, the first side portion 18 and the second side portion 20 are placed in the first direction X, which corresponds to the winding axis direction of the electrode assembly 60, so as to connect the top portion 16 and the bottom portion 17. In the top portion 16 and the side portions 18, 20, the opposing portions of the twofold laminate sheet 11 are stacked with their inner resin layers in contact with each other and welded together by heating and pressing. The housing part 13 is provided inside the stacked portion of the twofold laminate sheet 11 in the laminate sheet exterior body 12, and houses the electrode assembly 60.

Note that the laminate sheet 11 may have an outer resin layer on the metal layer that faces outward when folded in two and stacked. The outer resin layer may be made of, for example, nylon. The metal layer and the outer resin layer may be bonded, for example, with a dry lamination adhesive.

### "Description of Manufacturing Step"

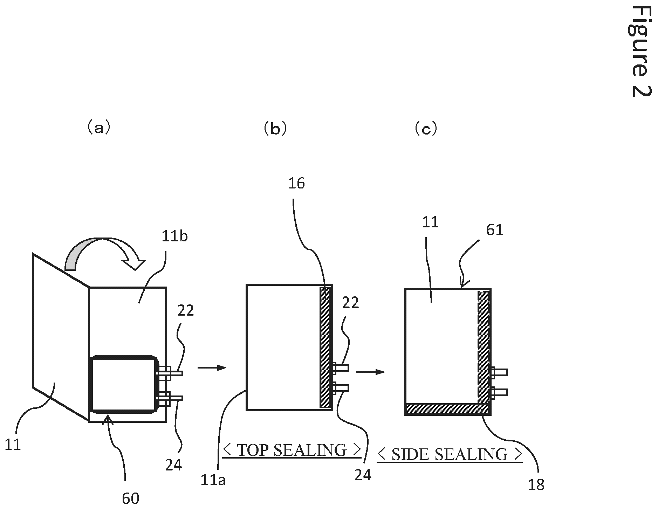

The basic step of manufacturing step for a secondary battery 10 comprising a laminate sheet exterior body 12 is described with reference to FIGS. 2 to 4.

First, a flat, wound electrode assembly 60 is fabricated. The electrode assembly 60 is formed by winding a strip-shaped positive electrode and a strip-shaped negative electrode with a separator interposed between them. At this time, tab films 26 and 28 are welded to the positive electrode tab 22 and the negative electrode tab 24, respectively. Next, the positive electrode tab 22 is welded to the exposed portion of the metal positive electrode core that forms the positive electrode, and the negative electrode tab 24 is welded to the exposed portion of the metal negative electrode core that forms the negative electrode.

A positive electrode active material layer is formed on the surface of the positive electrode core, and a negative electrode active material layer is formed on the surface of the negative electrode core. The positive electrode core is made of, for example, aluminum foil, and the negative electrode core is made of, for example, copper foil. The positive electrode active material layer contains a positive electrode active material such as a lithium transition metal composite oxide, and the negative electrode active material layer contains a negative electrode active material such as graphite. The ends of the electrode assembly 60 in the winding direction are fixed to the outermost surface of the electrode assembly 60 with tape.

Next, as shown in FIGS. 2(a) and 2(b), the laminate sheet 11 is folded in two so that the inner resin layer of the laminate sheet 11 encases the electrode assembly 60. At this time, the positive electrode tab 22 and the negative electrode tab 24 are extended out from the opposite side of the side of the folded-back portion 11a of the twofold laminate sheet 11. A top portion 16 is formed on the end of the laminate sheet 11 from which the positive electrode tab 22 and the negative electrode tab 24 extend out.

In this example, the length of the laminate sheet 11 in the second direction (the up-down direction in FIG. 2) is made sufficiently longer than the length of the electrode assembly 60 in the second direction, to provide a surplus portion 11b of the laminate sheet 11 at a portion adjacent to the electrode assembly 60. As described below, this surplus portion 11b is used to remove gas by decompressing the portion of the laminate sheet exterior body 12 that is to be the housing part 13.

Then, one end in the first direction (the right end in FIG. 2), which forms the top portion 16 of the twofold laminate sheet 11, is heated and pressed with a mold to weld the inner resin layers together, thereby sealing the top portion 16 as shown in FIG. 2(b).

Next, one end (the lower end portion in FIG. 2(c)) in the second direction (the up-down direction in FIG. 2(c)) of the laminate sheet 11, which encases the electrode assembly 60, is heated and pressed by a mold to weld the inner resin layers together, thereby sealing the first side portion 18. This forms a first intermediate body 61, in which the electrode assembly 60 is encased in a bag-shaped laminate sheet 11 with one end open.

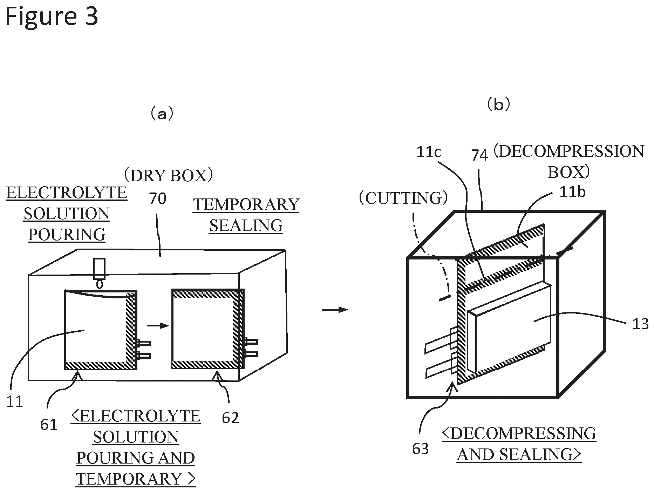

Next, as shown in FIG. 3(a), with the first intermediate body 61 placed in a dry box 70, electrolyte solution is poured into the upper opening of the laminate sheet 11. The electrolyte solution contains a non-aqueous solvent and an electrolyte salt dissolved in the non-aqueous solvent. Examples of non-aqueous solvents that can be used include esters, ethers, nitriles, amides, and mixed solvents of two or more of these. The non-aqueous solvent may also contain a halogen-substituted product in which at least a part of the hydrogen atoms in these solvents are replaced with halogen atoms such as fluorine. Examples of non-aqueous solvents include ethylene carbonate (EC), ethyl methyl carbonate (EMC), dimethyl carbonate (DMC), and mixed solvents thereof. Examples of electrolyte salts include lithium salts such as LiPF6.

After the electrolyte solution is poured into the first intermediate body 61, the open end portion of the laminate sheet 11 is temporarily sealed to form a second intermediate body 62. Next, the electrolyte solution is allowed to penetrate into the electrode assembly 60, and the second intermediate body 62 is charged with a predetermined amount.

After charging of the second intermediate body 62 is completed, as shown in FIG. 3(b), the second intermediate body 62 is placed in a decompression box 74. The second intermediate body 62 is then sealed at the intermediate portion of the surplus portion 11b while the inside of the housing part 13 is decompressed, and the decompression sealed part 11c is formed. This removes gas from the portion that is to be the housing part 13 due to decompression. The decompression sealed part 11c is then cut, and the third intermediate body 63 is formed in which the surplus portion 11b is separated.

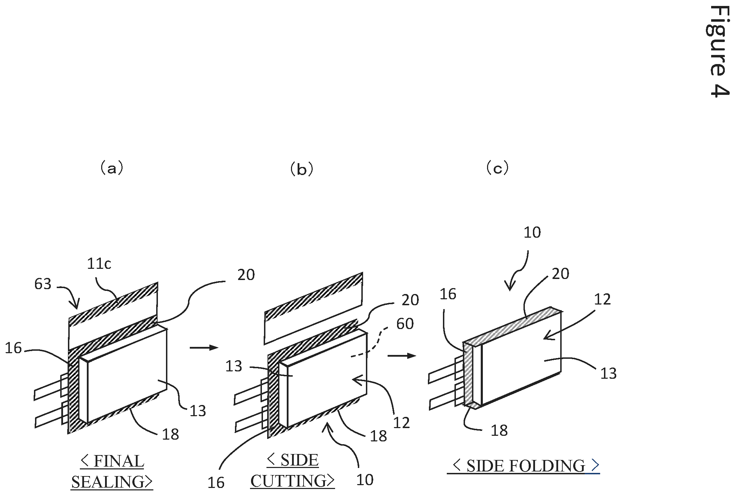

Next, as shown in FIG. 4(a), the second side portion 20 of the third intermediate body 63, which is a portion adjacent to the housing part 13 on the temporarily sealed side, is heated and pressed using a mold. This welds the inner resin layers together and thereby finally seals the second side portion 20. Then, as shown in FIG. 4(b), the portion outside the second side portion 20 is cut off, and unnecessary portion of the laminate sheet 11 is removed.

In this manner, a secondary battery 10 with the sides that have not been folded is obtained. The secondary battery 10 has a laminate sheet exterior body 12 provided with the rectangular parallelepiped housing part 13, called a cup, in which the electrode assembly 60 is enclosed. In the secondary battery 10 shown in FIG. 4(b), the housing part 13 protrudes only on one side (the front side of FIG. 4) relative to an imaginary plane including the top portion 16 and the side portions 18, 20. Alternatively, there may be a configuration such that: rectangular parallelepiped housing parts, each with a thickness approximately half that of the housing part 13, are formed respectively on the opposite sides of an imaginary plane including the top portion 16 and the side portions 18, 20; and the electrode assembly 60 is housed in the rectangular parallelepiped space formed by combining the two housing parts.

Then, as shown in FIG. 4(c), in the secondary battery 10 with the sides that have not been folded, the side portions 18, 20 of the laminate sheet exterior body 12 are then folded so that they are laid on the sides of the housing part 13, thereby obtaining the secondary battery 10 shown in FIG. 1. In FIG. 1, the side portions 18, 20 of the secondary battery 10 are folded so that they are laid on the housing part 13, but the secondary battery may be completed in an extended state as shown in FIG. 4(b) without folding the side portions 18, 20.

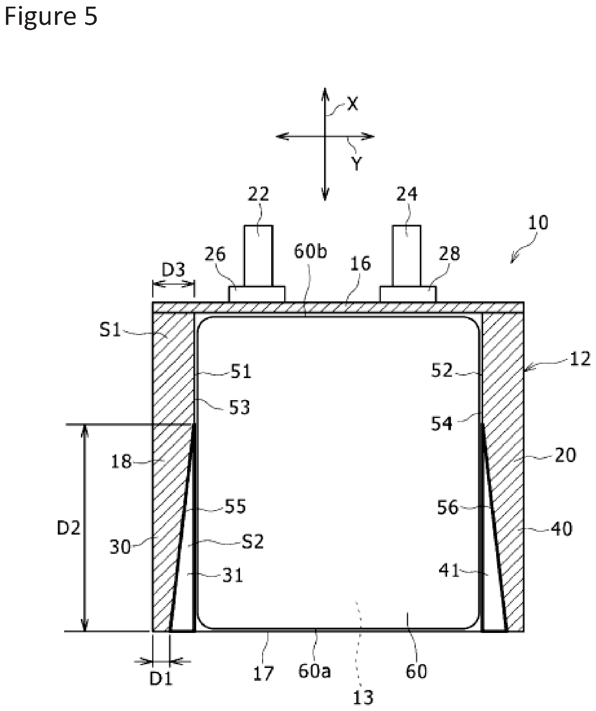

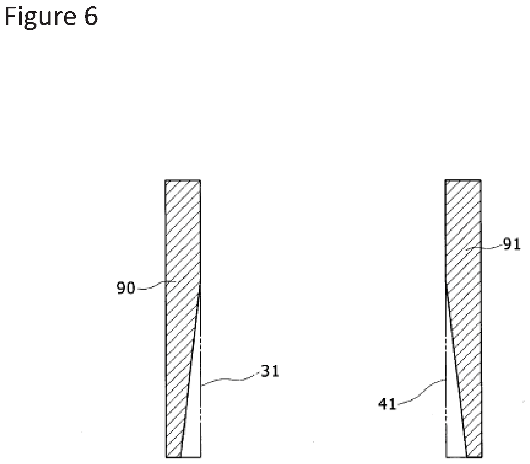

In the secondary battery 10 fabricated as described above, sealed parts are formed on the top portion 16 and the two side portions 18, 20. Conventionally, sealed parts have been formed in the top portion and side portions by welding the entire stacked portion of the twofold laminate sheet. However, in this case, the secondary battery has a limit to the storage amount of electrolyte solution unless the external dimensions are enlarged. Therefore, there is room for improvement in the storage amount of electrolyte solution in order to improve cycle characteristics. In this embodiment, the above-mentioned problem is solved by appropriately forming sealed parts and non-sealed parts in the top portion 16 and the side portions 18, 20. The characteristic features of this embodiment are specifically described below with reference to FIGS. 5 and 6.

FIG. 5 is a sectional view of the secondary battery 10 of FIG. 4 before the sides are folded. FIG. 6 is a plan view showing the pressing surfaces of molds 90, 91 to be used to heat and press the two side portions 18, 20 to obtain the secondary battery 10 of FIG. 5.

As shown in FIG. 5, in the secondary battery 10 before the sides are folded, the two side portions 18, 20 respectively have non-sealed parts 31, 41 that connect to the housing part 13 and the bottom portion 17, at portions including the bottom portion 17 side. Each of the non-sealed parts 31, 41 has a substantially triangular shape that widens toward the bottom portion 17. For example, when the sealed parts 30, 40 are formed in the side portions 18, 20, each of the non-sealed parts 31, 41 is formed by preventing welding of a part of the stacked portion of the twofold laminate sheet. More specifically, in heating and pressing the stacked portions of the laminate sheet 11 from the respective sides using the molds for the side portions 18, 20, the molds 90, 91 are used, as shown in FIG. 6, whose pressing surfaces each have a pentagonal planar shape. In other words, each of the pressing surfaces of the molds 90, 91 has a rectangular planar shape excluding the triangular region facing the non-sealed part 31, 41.

As a result, each of the non-sealed parts 31, 41 is spaced apart from the top portion 16. Furthermore, in each of the two side portions 18, 20, the inner edge 51, 52 of the sealed part 30, 40 on the housing part 13 side has a first edge portion 53, 54 extending linearly from the top portion 16 parallel to the first direction X, and a second edge portion 55, 56 extending from the intermediate portion in the first direction X so as to widen outward of the side portion 18, 20 toward the bottom portion 17. In other words, the width of each non-sealed part 31, 41 of the corresponding one of the two side portions 18, 20 varies so as to widen toward the bottom portion 17. In FIG. 5, each of the second edge portions 55, 56 has a shape of straight line inclined relative to the first direction X, but each may also have a gently curved shape.

As described above, each non-sealed part 31, 41 is connected to the housing part 13, and therefore functions as a storage space for the electrolyte solution. Furthermore, each non-sealed part 31, 41 is connected to the bottom portion 17, and one end surface 60a of the electrode assembly 60 in the winding axis direction, which is the first direction X, faces the bottom portion 17. This facilitates the supply of electrolyte solution to the end surface 60a of the electrode assembly 60.

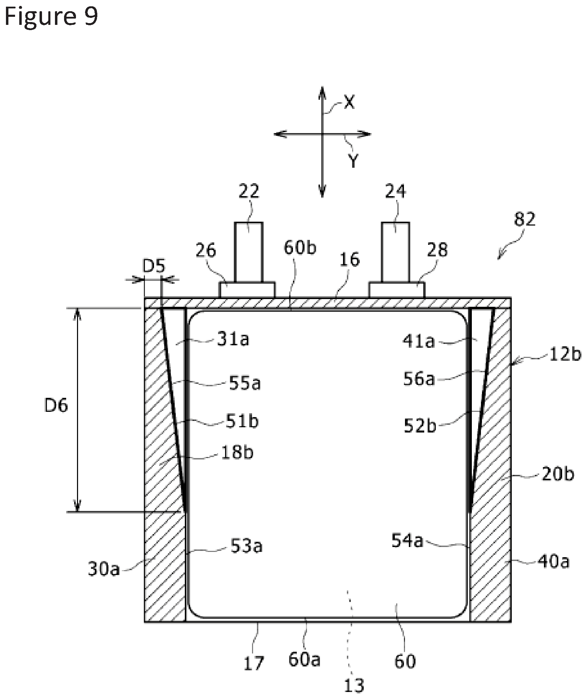

However, unlike the above embodiment, it is also conceivable to form non-sealed parts 31a, 41a on the top portion 16 side of side portions 18b, 20b so that they are connected to the top portion 16, as in Comparative Example 2 shown in FIG. 9 to be described below. However, in Comparative Example 2, when the top portion 16 is sealed, resin from the inner resin layer flows into the non-sealed parts 31a, 41a. This disadvantageously obstructs the electrolyte solution supply paths from the non-sealed parts 31a, 41a to the end surface 60b of the electrode assembly 60 and prevents the amount of electrolyte solution from increasing within the secondary battery. The embodiment shown in FIG. 5 prevents such disadvantage.

In the embodiment shown in FIG. 5, the minimum width D1 of each sealed part 30, 40 in corresponding one of the two side portions 18, 20 is preferably greater than or equal to 1 mm. In this example, the minimum width D1 is the width of each sealed part 30, 40 at the end closest to the bottom portion 17. This preferred configuration can further enhance the reliability of sealing performance for the electrolyte solution in each side portion 18, 20. In the configuration shown in FIG. 5, the shapes of the two side portions 18, 20 are symmetrical with respect to the center line of the battery 10 in the first direction X.

In each of the two side portions 18, 20, the ratio of the area of the non-sealed part 31, 41 to the total area of the sealed part 30, 40 and the non-sealed part 31, 41 as viewed in the thickness direction is preferably greater than or equal to 10% and less than or equal to 30%. This preferred configuration can further enhance the reliability of the sealing performance of each side portion 18, 20. In particular, in the above-described configuration such that the minimum width D1 is greater than or equal to 1 mm, it is more preferable to make the ratio of the area of the non-sealed part to the total area greater than or equal to 10% and less than or equal to 30% in order to enhance the reliability of the sealing performance of each side portion 18, 20. That is, for the side portion 18, when the area of the sealed part 30 is S1 and the area of the non-sealed part 31 is S2, it is preferable that S1 and S2 satisfy the relationship 10 ≤ S2 × 100/(S1 + S2) ≤ 30.

### EXAMPLES

The following examples further illustrate the present disclosure, but the present disclosure is not limited to the following examples.

### <Example>

### [Preparation of Non-Aqueous Electrolyte Solution]

A non-aqueous electrolyte solution was prepared by dissolving lithium hexafluorophosphate (LiPF6) at a concentration of 1.2 mol/L in a solvent prepared by mixing ethylene carbonate (EC) and ethyl methyl carbonate (EMC) in a volume ratio of 3:7 (25°C).

### [Fabrication of Secondary Battery]

A wound electrode assembly 60 was fabricated by spirally winding a positive electrode and a negative electrode with a separator interposed therebetween. The electrode assembly 60 was housed within a laminate sheet exterior body 12 so that two end surfaces 60a and 60b of the electrode assembly 60 in the winding axis direction respectively faced the bottom portion 17 and the top portion 16. The shape of the laminate sheet exterior body 12 was similar to that of the secondary battery 10 before the sides were folded, as shown in FIG. 5. The positive electrode tab 22 connected to the positive electrode of the electrode assembly 60 and the negative electrode tab 24 connected to the negative electrode thereof extended out of the top portion 16 of the laminate sheet exterior body 12. The non-aqueous electrolyte solution was injected into the laminate sheet 11 housing the electrode assembly 60 and sealed through the method similar to that shown in FIGS. 2 to 4. In this manner, the secondary battery 10 of Example 1 was fabricated. In the fabricated secondary battery 10, the minimum width D1 of each sealed part 30, 40 of the side portion 18, 20 was 1 mm. In each side portion 18, 20, the height D2 of the non-sealed part 31, 41 in the first direction X was 40 mm. The maximum width of each sealed part 30, 40, which coincided with the maximum width of the side portion 18, 20, was 4 mm.

The fabricated secondary battery 10 had a height of 69 mm in the first direction X, excluding the portions where the positive electrode tab 22 and the negative electrode tab 24 extended out, a width of 56 mm in the second direction Y, and a thickness of 4.9 mm in the direction perpendicular to both the first direction X and the second direction Y.

### [Charge-Discharge Cycle Test]

The secondary battery 10 was charged at a constant current of 1.0 C (3150 mA) in a 25°C environment until the battery voltage reached 4.4 V, and then charged again at a constant voltage of 4.4 V until the current reached 0.05 C (158 mA). After a ten-minute rest, the battery was discharged at a constant current of 1.0 C (3150 mA) until the battery voltage reached 3.0 V. The discharge capacity at this time was defined as the initial capacity. The initial capacity in this example was 3150 mAh. This charge-discharge cycle was repeated 500 times, with a twenty-minute rest period between each cycle, and the ratio of the discharge capacity after 500 cycles to the initial capacity was calculated as the capacity retention rate. The capacity retention rate was calculated for ten secondary batteries, and the average value of these capacity retention rates was also calculated.

[Evaluation of Electrolyte Solution Amount in Battery] The maximum amount of non-aqueous electrolyte solution that could be stored in the secondary battery 10 was injected into the secondary battery 10. Then, the resulting secondary battery 10 was weighed before and after injection of the non-aqueous electrolyte solution to evaluate the electrolyte solution amount in the battery, which is the mass of the non-aqueous electrolyte solution in the secondary battery 10. The electrolyte solution amounts in the batteries were evaluated for 30 secondary batteries, and the average value of the electrolyte solution amounts in the batteries was also calculated.

### [Leakage Test]

The secondary batteries 10, in a predetermined state of charge, were stored for 10 days in a high-temperature, high-humidity environment in which the temperature was 80°C and the humidity was 90%, and the presence or absence of electrolyte solution leakage was checked. Leakage was checked for ten secondary batteries.

### <Comparative Example 1>

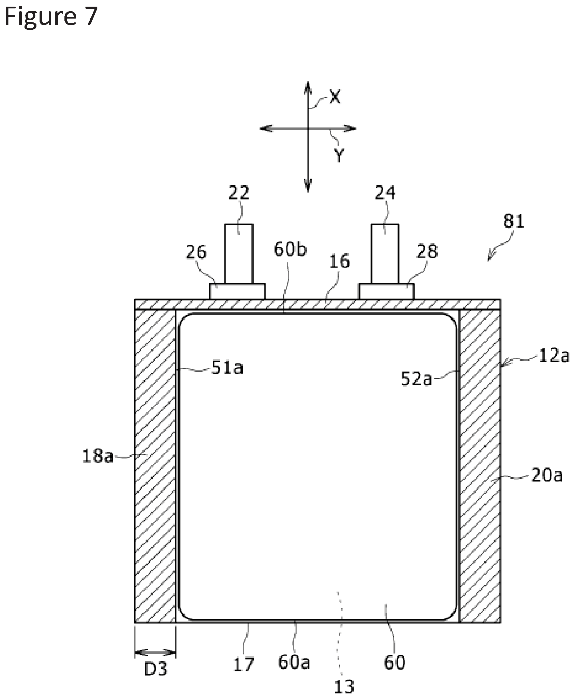

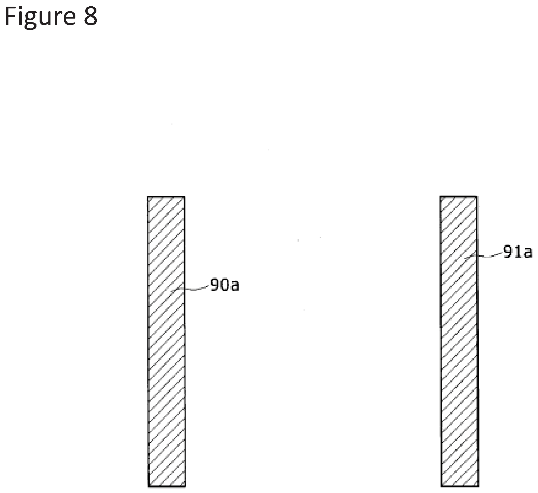

FIG. 7 is a view corresponding to FIG. 5 of a secondary battery 81 of Comparative Example 1. FIG. 8 is a plan view showing the pressing surfaces of molds 90a and 91a used to heat and press two side portions 18a and 20a to obtain the secondary battery 81 of FIG. 7. As shown in FIG. 7, in Comparative Example 1, in the secondary battery 81 before the sides were folded, a laminate sheet exterior body 12a has the stacked portion of the twofold laminate sheet in which the entire portions that are to be two rectangular side portions 18a, 20a are welded, and rectangular sealed parts are formed over the entire side portions 18a, 20a. Accordingly, when the side portions 18a, 20a are heated and pressed using molds from both sides of stacked portion on the laminate sheet, molds 90a, 91a are used that have pressing surfaces each having a rectangular planar shape, as shown in FIG. 8. Furthermore, in each of the two side portions 18a, 20a, the entire inner edge 51a, 52a on the housing part 13 side extends linearly parallel to the first direction X so as to connect the top portion 16 and the bottom portion 17. In Comparative Example 1, a secondary battery 81 was fabricated and evaluated in the same manner as in Example except for the above.

### <Comparative Example 2>

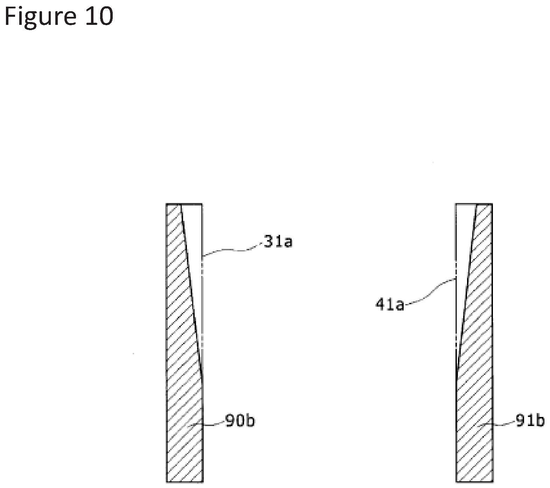

FIG. 9 is a view corresponding to FIG. 5 of a secondary battery of Comparative Example 2. FIG. 10 is a plan view showing the pressing surfaces of molds 90b, 91b to be used to heat and press two side portions 18b, 20b to obtain a secondary battery 82 of FIG. 9. As shown in FIG. 9, in Comparative Example 2, in the secondary battery 82 before the sides are folded, a laminate sheet exterior body 12b has non-sealed parts 31a, 41a on the top portion 16 side of the respective side portions 18b, 20b, which connect to the housing part 13 and the top portion 16. Each of the non-sealed parts 31a, 41a has a substantially triangular shape that widens toward the top portion 16. When the sealed parts 30a, 40a are formed in the side portions 18b, 20b, each of the non-sealed parts 31a, 41a is formed by preventing welding of a part of the stacked portion of the twofold laminate sheet. More specifically, when the side portions 18b, 20b are heated and pressed using molds from both sides of stacked portion on the laminate sheet, molds 90b and 91b are used, each width of which decreases toward the top portion 16 and each pressing surface of which has a pentagonal planar shape, as shown in FIG. 10. In other words, each of the pressing surfaces of the molds 90b, 91b has a rectangular planar shape excluding the triangular region facing the non-sealed part 31a, 41a.

The non-sealed parts 31a, 41a are spaced apart from the bottom portion 17. Furthermore, in each of the two side portions 18b, 20b, the inner edge 51b, 52b of the sealed part 30a, 40a on the housing part 13 side has a first edge portion 53a, 54a extending linearly from the bottom portion 17 parallel to the first direction X, and a second edge portion 55a, 56a extending in a direction inclined with respect to the first direction X so as to widen outward of the side portions 18b, 20b from the intermediate portion in the first direction X toward the top portion 16. This forms the non-sealed parts 31a, 41a so as to be connected to the top portion 16.

In the fabricated secondary battery 82, the minimum width D5 of each sealed part 30a, 40a of the side portion 18b, 20b is 1 mm. The height D6 of the non-sealed part 31a, 41a of each side portion 18b, 20b in the first direction X is 40 mm. In Comparative Example 2, a secondary battery 82 was fabricated and evaluated in the same manner as in Example except for the above.

Table 1 shows the evaluation results of the electrolyte solution amount in the battery, capacity retention rate after 500 cycles, and leakage test for each of secondary batteries 10, 81, 82 according to Example and Comparative Examples 1 and 2.

**[Table 1]**

| | | Example | Comparative Example 1 | Comparative Example 2 |
|---|---|---|---|---|
| Electrolyte solution battery N=30 | amount in | 5.51 g (5.45~5.59g) | 5.39g (5.34~5.44g) | 5.45g (5.40~5.49g) |
| Charge-discharge cycle N=10 | Capacity retention rate after 500 cycles | 93% (92~94%) | 89% (88~90%) | 91% (90~92%) |
| Leakage test N=10 | 10 days | 10/10 | 10/10 | 10/10 |
| | Storage in high-temperature, high-humidity environment | No leakage | No leakage | No leakage |

"Electrolyte solution amount in battery" columns in Table 1 each show the average value for N = 30 test samples and the range of measured values in parentheses.

"Capacity retention rate after 500 cycles" columns in Table 1 each show the average value of the evaluation results for N = 10 test samples and the range of measured values in parentheses.

"Leakage test" columns in Table 1 each show the ratio of the number of test samples that did not leak to the number of total test samples for N = 10 test samples.

As can be seen from the results shown in Table 1, the electrolyte solution amount in the battery increased in both the Example and Comparative Example 2 compared to Comparative Example 1. The reason for this is that in Comparative Example 1, the entire stacked portions of the side portions 18a, 20a are sealed parts, and the gaps in the stacked portions cannot be used as electrolyte solution storage spaces. In contrast, in Example and Comparative Example 2, the laminate sheet is unwelded at the portions that form the non-sealed parts 31, 41, 31a, 41a in the stacked portions of the side portions 18, 20, 18b, 20b. Therefore, the gaps in the unwelded stacked portions of the non-sealed parts 31, 41, 31a, 41a can be used as storage spaces of electrolyte solution. As a result, the Example and Comparative Example 2 each can increase the amount of electrolyte solution amount in the battery compared to Comparative Example 1.

Furthermore, as can be seen from the results shown in Table 1, the increase in the electrolyte solution amount in the battery in the Example is greater than that in Comparative Example 2. In Comparative Example 2, non-sealed parts 31a, 41a are formed in a portion including the top portion 16 so as to connect to the top portion 16. Therefore, in Comparative Example 2, compared to the Example, it is considered that resin protrudes from the inner resin layer of the laminate sheet into the non-sealed parts 31a, 41a during heating and pressing of the sealed part of the top portion 16, limiting the storage space of electrolyte solution within the non-sealed parts 31a, 41a. In contrast, in Example, the non-sealed parts 31, 41 are not affected by the resin protrusion from the top portion 16. This is considered to be why the increase in the electrolyte solution amount in the battery compared to Comparative Example 1 is greater in Example than in Comparative Example 2.

Furthermore, regarding the capacity retention rate after 500 cycles, the capacity retention rate in Example is higher than in Comparative Examples 1 and 2 due to increase in the electrolyte solution amount in the battery.

Furthermore, regarding the reliability of the sealed part, the results of the leakage test in Table 1 show that no leakage from the secondary batteries is confirmed in any of the Example, Comparative Example 1, and Comparative Example 2, and all are normal. Although not shown in Table 1, it is confirmed that the secondary battery in Comparative Example 2 is slightly thicker than that of the Example. The reason for this is considered to be that in Comparative Example 2, instead of the bottom portion 17 side, the non-sealed parts 31a, 41a are formed so as to connect to the top portion 16 near the ends of the laminate sheet, making moisture likely to be absorbed from outside the secondary battery to increase the thickness. In contrast, in Example, the non-sealed parts 31, 41 are formed so as to connect to the bottom portion 17, which is the folded-back portion of the laminate sheet, so that moisture is not absorbed from the outside, and no increase is confirmed in the thickness of the secondary battery. For this reason, it is considered that the sealed parts in Example are more reliable than those in Comparative Example 2.

As described above, according to the configuration of the present disclosure, by forming the non-sealed parts 31, 41 at appropriate positions on the respective side portions 18, 20, it is possible to partially create spaces in the side portions 18, 20 that can store electrolyte solution. This makes it possible to increase the storage amount of the electrolyte solution to improve the cycle characteristics without compromising the sealing performance of the laminate sheet exterior body 12 or increasing the external dimensions.

The present disclosure is further described with the following embodiments.

### Configuration 1:

A non-aqueous electrolyte solution secondary battery, comprising:
an electrode assembly having a positive electrode connected to a positive electrode tab and a negative electrode connected to a negative electrode tab; and
a laminate sheet exterior body formed by folding a laminate sheet in two along a bottom portion, the laminate sheet including an adhesive resin layer, wherein
the laminate sheet exterior body has a top portion from which the positive electrode tab and the negative electrode tab extend out at a stacked portion of outer peripheral portions of the laminate sheet, two side portions connecting the top portion and the bottom portion, and a housing part that houses the electrode assembly inside the stacked portion,
the top portion and the two side portions each have a sealed part;
each of the two side portions has a non-sealed part connecting to the housing part and the bottom portion, and
each of the non-sealed parts is spaced apart from the top portion.

### Configuration 2:

The non-aqueous electrolyte solution secondary battery according to Configuration 1, wherein the non-sealed part of each of the two side portions has a width varying so as to widen toward the bottom portion.

### Configuration 3:

The non-aqueous electrolyte solution secondary battery according to Configuration 1 or 2, wherein
the electrode assembly is a wound type in which the positive electrode and the negative electrode are wound with a separator interposed therebetween, and
one end surface of the electrode assembly in a winding axis direction faces the bottom portion and another end surface of the electrode assembly in the winding axis direction faces the top portion.

### Configuration 4:

The non-aqueous electrolyte solution secondary battery according to any one of Configurations 1 to 3, wherein the sealed part in each of the two side portions has a minimum width of 1 mm or more.

### Configuration 5:

The non-aqueous electrolyte solution secondary battery according to any one of Configurations 1 to 4, wherein a ratio of an area of the non-sealed part to a total area of the sealed part and the non-sealed part as viewed in a thickness direction in each of the two side portions is greater than or equal to 10% and less than or equal to 30%.

### REFERENCE SIGNS LIST

10 Non-aqueous electrolyte solution secondary battery (secondary battery), 11 Laminate sheet, 12 Laminate sheet exterior body, 13 Housing part, 16 Top portion, 17 Bottom portion, 18, 18a, 18b First side portion, 20, 20a, 20b Second side portion, 22 Positive electrode tab, 24 Negative electrode tab, 26, 28 Tab film, 30, 30a sealed part, 31, 31a Non-sealed part, 40, 40a Sealed part, 41, 41a Non-sealed part, 51, 52, 51a, 52a, 51b, 52b Inner edge, 53, 54, 53a, 54a First edge portion, 55, 56, 55a, 56a Second edge portion, 60 Electrode assembly, 61 First intermediate body, 62 Second intermediate body, 63 Third intermediate body, 81, 82 Secondary battery, 90, 91, 90a, 91a, 90b, 91b Mold.

## Claims

1. A non-aqueous electrolyte solution secondary battery, comprising:
an electrode assembly having a positive electrode connected to a positive electrode tab and a negative electrode connected to a negative electrode tab; and
a laminate sheet exterior body formed by folding a laminate sheet in two along a bottom portion, the laminate sheet including an adhesive resin layer, wherein
the laminate sheet exterior body has a top portion from which the positive electrode tab and the negative electrode tab extend out at a stacked portion of outer peripheral portions of the laminate sheet, two side portions connecting the top portion and the bottom portion, and a housing part that houses the electrode assembly inside the stacked portion,
the top portion and the two side portions each have a sealed part,
each of the two side portions has a non-sealed part connecting to the housing part and the bottom portion, and
each of the non-sealed parts is spaced apart from the top portion.

2. The non-aqueous electrolyte solution secondary battery according to claim 1, wherein the non-sealed part of each of the two side portions has a width varying so as to widen toward the bottom portion.

3. The non-aqueous electrolyte solution secondary battery according to claim 1, wherein
the electrode assembly is a wound type in which the positive electrode and the negative electrode are wound with a separator interposed therebetween, and
one end surface of the electrode assembly in a winding axis direction faces the bottom portion and another end surface of the electrode assembly in the winding axis direction faces the top portion.

4. The non-aqueous electrolyte solution secondary battery according to claim 1, wherein the sealed part in each of the two side portions has a minimum width of 1 mm or more.

5. The non-aqueous electrolyte solution secondary battery according to claim 1, wherein a ratio of an area of the non-sealed part to a total area of the sealed part and the non-sealed part as viewed in a thickness direction in each of the two side portions is greater than or equal to 10% and less than or equal to 30%.
